# EUROPÄISCHE PATENTANMELDUNG

(11) **EP 3 489 182 A1**
(43) Veröffentlichungstag der Anmeldung: **29.05.2019**
(21) Anmeldenummer: 18207839.4
(22) Anmeldetag: 22.11.2018
(51) Int. Cl.: B65H 39/055, B65H 39/043

(54) **TRANSPORTEINRICHTUNG FÜR DIE STAPELUNG VON TEILBUCHBLOCKS**

(30) Priorität: 28.11.2017 CH 14462017
(71) Anmelder: Müller Martini Holding AG, 6052 Hergiswil (CH)
(72) Erfinder: Landolt, Michael, 6260 Reiden (CH); Gut, Matthias, 6244 Nebikon (CH)

(57) **Zusammenfassung**

Die Erfindung betrifft eine Transporteinrichtung (100) für die Stapelung mehrerer Teilbuchblocks entlang einer aus Überführungsstrecken gebildeten Transportstrecke, wobei das fertig gestapelte Buchblockprodukt anschliessend einer Bearbeitungsmaschine zuführbar ist, wobei die Transporteinrichtung aus mindestens folgenden Elementen gebildet ist: i) einer ersten Überführungsstrecke (UEF-1), welche zu Beginn der Transporteinrichtung (100) angeordnet ist; ii) mindestens einem ersten Trennelement (TE-1), das der ersten Überführungsstrecke (UEF-1) nachgeschaltet und mindestens einer zweiten Überführungsstrecke (UEF-2) vorgeschaltet ist; iii) einem der zweiten Überführungsstrecke (UEF-2) nachgeschalteten zweiten oder letzten Trennelement (TE-2), welches einer mit der Transporteinrichtung (100) in Wirkverbindung stehenden Bearbeitungsmaschine (BM) vorgeschaltet ist; iv) einer Überleitungsstrecke (ULS), welche vor oder nach dem letzten Trennelement angeordnet ist, innerhalb welcher das dort eingeleitete Buchblockprodukt von einer flach liegenden in eine stehend geführte Transportlage überführbar ist; v) wobei mindestens eine Überführungsstrecke (UEF-1, UEF-2, UEF-3) mit mindestens einer Bogenstapelzuführungseinheit (BSZ-1, BSZ-2) und/oder mindestens einem ZTM-Anleger (ZTM-1) bestückt ist.

## Beschreibung

### Technisches Gebiet

Die Erfindung betrifft eine Transporteinrichtung für die Stapelung von Teilbuchblocks entlang einer aus Überführungsstrecken gebildeten Transportstrecke, wobei das fertig gestapelte Buchblockprodukt anschliessend einer Bearbeitungsmaschine zugeführt wird, gemäss Oberbegriff eines der Ansprüche 1 oder 2.

### Stand der Technik

Aus EP2883820 A1 ist eine Transportvorrichtung für Buchblocks bekanntgeworden. Dabei weist diese Transportvorrichtung einen stromab des Zuförderers angeordneten, mit der Steuerung verbundenen und mit einer ersten Geschwindigkeit betriebenen Stauförderer auf, auf dem mehrere Buchblocks lückenlos aneinander anliegend mit der ersten Geschwindigkeit transportierbar sind. Darüber hinaus weist die Transportvorrichtung einen stromab des Stauförderers angeordneten, mit der Steuerung verbundenen und zum Transport jeweils eines einzigen Buchblocks ausgebildeten Eintaktförderer, auch als Übergabeelement bekannt, auf, wobei jeweils ein einziger Buchblock mit der ersten Geschwindigkeit vom Stauförderer auf den Eintaktförderer übergebbar ist. Dabei ist der Buchblock mit dem Eintaktförderer von der ersten Geschwindigkeit auf eine zweite Geschwindigkeit beschleunigbar, mit der zweiten Geschwindigkeit zum Wegförderer transportierbar sowie zwischen zwei aufeinanderfolgende Mitnehmer an den Wegförderer übergebbar.

In einer Ausführungsform dieser Transportvorrichtung ist stromab des Eintaktförderers und stromauf des Wegförderers ein mit der Steuerung verbundener und mit einer veränderbaren Geschwindigkeit antreibbarer Weiterförderer angeordnet. Dabei ist zumindest ein Buchblock mit der Geschwindigkeit des Eintaktförderers übernehmbar und vom Weiterförderer an den Wegförderer übergebbar. Im Bereich des Weiterförderers ist eine Einrichtung zum Erfassen der Lage und/oder des Formats des Buchblocks, insbesondere seiner Abmessung in Produktionsrichtung angeordnet, wobei ein aus der Erfassung resultierender Wert mit einem der Steuerung bekannten Vorgabewert vergleichbar und das Vergleichsergebnis zum Variieren der Geschwindigkeit des Weiterförderers verwendbar ist. Daraus ergibt sich der Vorteil, dass Buchblocks durch variierbare Geschwindigkeitsänderung des Weiterförderers nacheinander noch genauer zwischen zwei aufeinanderfolgende Mitnehmer des Wegförderers übergeben werden können.

Der Eintaktförderer im Zusammenhang mit dieser Transportvorrichtung kann mit einem Antrieb ausgestattet sein, wobei im Bereich des Eintaktförderers mindestens ein Sensor zur Erfassung der Lage des Buchblocks auf dem Eintaktförderer angeordnet ist und wobei der Antrieb und der mindestens eine Sensor mit der Steuerung verbunden sind. Der Antrieb des Eintaktförderers kann somit zusätzlich entsprechend der vom Sensor an die Steuerung übertragenen Daten zur Lage des Buchblocks auf dem Eintaktförderer beschleunigt oder verzögert werden.

Aus EP2810904 A1 geht sodann ein Verfahren und eine Vorrichtung zur taktweisen Zuführung eines aus mindestens einem Druckbogen gebildeten liegend transportierten Buchblocks zu einer Verarbeitungsstation hervor. Der Buchblock wird mit einer ersten Transporteinrichtung an einen eine Auflagefläche aufweisenden Transportkanal einer zweiten Transporteinrichtung übergeben. Anschliessend wird der Buchblock von einem in einem Spalt des Transportkanals angeordneten Transportfinger übernommen und der Verarbeitungsstation zugeführt, wozu die erste Transporteinrichtung in eine Aussparung des Transportkanals eingreift. Dabei wird eine kammförmig ausgebildete Einführklappe aus einer ersten Position zur Übernahme des Buchblocks von den Transportmitteln in eine zweite Position zur Übergabe des Buchblocks in den Transportkanal der zweiten Transporteinrichtung geschwenkt.

### Darstellung der Erfindung

Der Erfindung, wie sie in den Ansprüchen gekennzeichnet ist, liegt die Aufgabe zugrunde, eine Transporteinrichtung vorzuschlagen, über welche mit hoher Geschwindigkeit die Stapelung sukzessiv zugeführter loser Teilbuchblocks durchgeführt wird, wobei sich diese Zuführung auf Teilbuchblocks bezieht, welche flach aufeinander gestapelt werden, unabhängig davon, aus welcher Ebene diese Zuführung erfolgt. Die flach gestapelten Teilbuchblocks werden auch in diesem Zustand entlang der Transporteinrichtung befördert, und erst in einer Endphase wird ihre Lage entsprechend den Bedürfnissen einer nachgeschalteten Bearbeitungsmaschine angepasst, also vorzugsweise von einem flachliegenden Zustand in eine senkrechte Lage überführt.

Erfindungsgemäss werden die aufeinanderfolgend eingebrachten losen Teilbuchblocks zunächst formschlüssig flach aufeinander liegend in einen ebenfalls flach verlaufenden Buchkanal (Liegendkanal) eingebracht, wobei sich diese Technik grundsätzlich von derjenigen unterscheidet, bei welcher die Buchblocks durchwegs entlang eines "Stehendkanals", also auf den Buchrücken liegend, transportiert werden.

Grundsätzlich wird der Buchkanal durch eine Reihe von vorzugsweise aufeinanderfolgenden Überführungsstrecken, auch Transportstrecken genannt, gebildet, welche segmentiert zueinander betrieben werden, was zu einer vorteilhaften Betriebsautonomie führt. Erst gegen Schluss des Buchkanals wird das flach transportierte und fertig zusammengefügte Buchblockprodukt für die Belange der anschliessenden Bearbeitungsmaschine in eine andere Lage überführt.

Dabei geht es erfindungsgemäss darum, entlang einer Transporteinrichtung ein Buchblockprodukt fertig so zu stapeln, dass es anschliessend, durch den zusätzlichen Betrieb von Trennelementen innerhalb der Transporteinrichtung, jene Voraussetzungen geschaffen werden, durch welche das Buchblockprodukt geordnet, taktgenau, takt- und lagekonform in eine anschliessende Bearbeitungsmaschine überführt werden kann.

Die in Produktionsrichtung von einer ersten Bogenstapelzuführungseinheit in eine erste Überführungsstrecke eingebrachten losen Teilbuchblocks, bestehend aus Digitaldruck- oder Nichtdigitaldruckprodukten, beispielsweise aus vorzusammengetragenen konventionellen Produkten, werden über einen anschliessenden ZTM-Anleger geführt, wo zusätzliche Einzelblätter oder Bogen hinzukommen. Gilt die buchblockgemässe Stapelung nach diesem ZTM-Anleger als abgeschlossen, so wird dieses Buchblockprodukt anschliessend einem Klebebinder, einer Fadenheftmaschine oder einer anderen Bearbeitungsmaschine für die weitere Fertigung zugeführt.

Soweit aber diese Stapelung von Teilbuchblocks noch nicht als abgeschlossen gilt, wird im Nachgang zu dem ZTM-Anleger eine weitere Bogenstapelzuführungseinheit vorgesehen, über welche das lose bis anhin gebildete Buchblockpaket mit weiteren Teilbuchblocks ergänzt wird.

Wenn von losen Teilbuchblocks die Rede ist, so schliesst dies nicht aus, dass Teile davon bei Bedarf für die intertemporäre Buchblockbildung mindestens rückenseitig durch ein Klebeverfahren gezielt geklebt werden.

Schon aus diesen summarischen Ausführungen geht demnach hervor, dass die Bildung des aus verschiedenen Teilbuchblocks gebildeten Endbuchblocks (Buchblockprodukt) an sich sorgfältig vonstattengehen muss, will man sicherstellen, dass das fertig gestapelte Buchblockprodukt auf dem Weg zu einer nachgeschalteten Bearbeitungsmaschine seine Stapelungshomogenität beibehält, womit beim Einführung dieses Buchblockprodukts in die nachfolgende Bearbeitungsmaschine, beispielsweise Klebebinder, Fadenheftmaschine, etc., keine diesbezüglichen weiteren Ausrichtungsmassnahmen mehr vorgenommen werden müssen.

An sich lässt sich die Transporteinrichtung für den liegenden Transport der Teilbuchblocks oder Buchblockprodukte durch weitere ZTM-Anleger und/oder Bogenstapelzuführungseinheiten ergänzen, deren Abrufung für das jeweilige Buchblockprodukt integral oder nur punktuell erfolgen kann, d.h., bei Bedarf können solche Zuführungsstationen bei der Bildung des Buchblockprodukts einfach übersprungen werden.

Beim Betrieb einer solchen für den liegenden Transport der Teilbuchblocks ausgebildeten Transporteinrichtung zur Bildung eines Endbuchblocks unter Zuhilfenahme mehrerer Zuführungsstationen (Bogenstapelzuführungseinheiten, ZTM-Anleger, etc.) müssen noch weitere Vorkehrungen hinzukommen, welche sicherstellen, dass der Betrieb kontinuierlich abgewickelt werden kann.

Beispielsweise werden für den liegenden Transport der Buchblockprodukte entlang eines aus Überführungsstrecken gebildeten Buchkanals in Produktionsrichtung die bereits erwähnten Bogenstapelzuführungseinheiten, ZTM-Anleger, etc., und Trennelemente vorgesehen, welche regelmässig oder beliebig angeordnet sind.

Eine typische Förderkontinuität kann darin bestehen, dass nach einer ersten Bogenstapelzuführungseinheit ein erster ZTM-Anleger angeordnet ist, worauf bereits ein erstes Trennelement wirkt. Die nachfolgende Förderkontinuität kann sich nach dieser Vorgabe wiederholen oder die Reihenfolge der Zuführungselemente kann beliebig gestaltet sein, wobei diese einzeln oder in Kombination zueinander in der Regel einer eigenständig operierenden Überführungsstrecke zugeordnet sind.

Das bedeutet im konkreten Fall, dass nach einer ersten Überführungsstrecke, welche sich über die erste Bogenstapelzuführungseinheit und/oder den ZTM-Anleger erstreckt, bereits ein erstes autonom und interdependent betreibbares Trennelement vorgesehen ist, welches nach Bedarf ordnend eingreift, sollen die nachfolgenden Aggregate taktkonform betrieben werden.

Wenn von einem autonom und interdependent betreibbaren Trennelement die Rede ist, so wird damit hervorgehoben, dass seine Funktion eindeutig darin besteht, die bis anhin gebildeten losen und liegend angeordneten Teilbuchblocks von einer vorangehenden zu einer nachgeschalteten Überführungsstrecke kontinuierlich und formschlüssig, aber nicht zwingend mit dem vorangehenden Betrieb takteinhaltend zu fördern.

Andererseits ist dieses Trennelement auch in der Lage, die Überführung des Buchblockprodukts von einer vorangehenden zu einer nachfolgenden Überführungsstrecke förderungstechnisch zu trennen, dergestalt, dass die beiden Strecken dann autonom betrieben werden können.

Wenn das Trennelement also die Funktion erfüllen muss, das Buchblockprodukt von einer vorangehenden zu einer nachgeschalteten Überführungsstrecke nach bestimmten Kriterien zu fördern, so müssen Vorkehrungen getroffen werden, um das Trennelement in die Lage zu versetzen, je nach Bedarf, verschiedene Geschwindigkeitsprofile zu fahren. Dabei soll nicht nur die Taktvorgabe über die verschiedenen Überführungsstrecken, sondern auch die Produktlängen und allenfalls auch die weitere Beschaffenheit (Papierstruktur, etc.) der losen Teilbuchblocks berücksichtigt werden.

Demnach besteht die Infrastruktur der Transporteinrichtung aus einer aus Überführungsstrecken gebildeten Transportstrecke, welche im Normalfall durch folgende Elemente bestückt ist, nämlich:
i) aus einer ersten Überführungsstrecke, welche in Wirkverbindung mit mindestens einer ersten Bogenstapelzuführungseinheit und mindestens einem ersten ZTM-Anleger steht; ii) aus einem ersten Trennelement, das der ersten Überführungsstrecke nachgeschaltet ist; iii) aus einer dem ersten Trennelement folgenden zweiten Überführungsstrecke, welche in Wirkverbindung mit mindestens einer zweiten Bogenstapelzuführungseinheit steht; iv) aus einem zweiten Trennelement, das der zweiten Überführungsstrecke nachgeschaltet ist; v) aus einer dritten Überführungsstecke, welche spätestens hier die lagemässige Infrastruktur des Buchblockprodukts für die anschliessende Bearbeitungsmaschine bereitstellt; vi) wobei diese Infrastruktur vorzugsweise durch eine Überleitungsstrecke gebildet wird, welche ohne Weiteres auch vor dem letzten Trennelement angeordnet werden kann.

Ausgehend von einer solchen Transportstrecke, welche nicht als abschliessend zu betrachten ist, lassen sich die folgenden Gegenstände und Betriebsarten erkennen, welche zu der Erfindung gehören:

Eine durchgehende Betriebsart der Transportstrecke besteht demnach darin, dass alle genannten Elemente effektiv und gleichzeitig in Betrieb stehen. Bei dieser Betreibungsart muss aber die Konsistenz der einzelnen Teilbuchblocks nicht zwingend uniform sein, d.h., obwohl alle Zuführungselemente zur Bildung eines fertigen Buchblockprodukts für eine nachgeschaltete Bearbeitungsmaschine beitragen, können ihre spezifischen Anteile zum jeweiligen fertigen Buchblock verschieden sein, so dass intermediär bei einzelnen Zuführungselementen gar keine Abrufung stattfinden kann. Dies ist zum Beispiel dann der Fall, wenn über einen ZTM-Anleger nicht vollumfänglich alle möglichen Einzelblätter oder Bogen abgezogen werden, welche an sich möglich wären.

Eine erste gezielt eingeschränkte Betriebsart der Transporteinrichtung besteht darin, dass die erste Überführungsstrecke mit ihren Bogenstapelzuführungseinheit und/oder ZTM-Anleger gebypasst wird, und erst die zweite Bogenstapelzuführungseinheit in Funktion tritt, womit das erste Trennelement entweder nicht vorhanden ist oder ausser Betrieb gesetzt wird. Indessen, dies ist nicht absolut zu betrachten, denn es können intermediär nach Bedarf bei der Zuführung verschiedener aufeinanderfolgender Teilbuchblocks die genannten nicht unmittelbar in Betrieb stehenden Elemente punktuell immer wieder aktiviert werden, demnach lässt es sich jederzeit zu einem durchgehenden Betrieb übergehen.

Eingeschränkt ist der Betrieb auch dann, wenn zwar die erste Bogenstapelzuführungseinheit nicht im Betrieb ist, wohl aber der ZTM-Anleger. Bei einem solchen Betrieb ist dann das erste Trennelement voll operativ tätig, welches dann dafür sorgt, dass die abgezogen Einzelblätter oder Bogen vom ZTM-Anleger, auch wenn sie diskontinuierlich geliefert werden, lage- und taktkonform der zweiten Überführungsstrecke übergeben werden können, wo sie dann mit der Zuführung aus der zweiten Bogenstapelzuführungseinheit ergänzt werden können. Es liegt auf der Hand, dass die Aktivierung dieser zweiten Bogenstapelzuführungseinheit unmittelbar auf den Betrieb des zweiten Trennelements kinematisch-operative Wirkungen auslöst, welche weiter unten beschrieben werden.

Eine quasi-durchgehende Betriebsart ist zum Beispiel dann gegeben, wenn die zweite Bogenstapelzuführungseinheit keinen Beitrag leistet und deshalb temporär oder durchgehend ausser Betrieb steht. Damit kann der Betrieb der Überführungsstrecke ab dem ersten Trennelement für die nachfolgenden Zuführungselemente durchgehend im Takt betrieben werden, d.h., das zweite Trennelement fördert die Buchblockprodukte synchron gegenüber dem von der zweiten Überführungsstrecke vorgegeben Takt mit Wirkungen auf die dritte Überführungsstrecke, welche als Überleitung zu der Bearbeitungsmaschine dient.

Eine solche unterteilte Transportstrecke hat auch den Vorteil, dass jederzeit Teilbuchblocks aus dem Durchlauf abgezweigt werden können, beispielsweise nach dem ersten Trennelement und/oder nach der Zuführung aus dem ZTM-Anleger. Diese Eingriffe können durch verschiedene Vorgaben motiviert sein, beispielsweise, wenn die Steuerung wegen festgestellter Qualitätsmängel eingreift und das Produkt vorweg ausscheidet, oder wenn die Steuerung eine solche Abzweigung aktiv disponiert, weil beispielsweise das vorliegende Buchblockprodukt einer anderen Bearbeitungsmaschine zugeführt werden soll. Daraus lässt sich erkennen, dass gerade durch die beschriebene Unterteilung der Transporteinrichtung in verschiedene Überführungsstrecken, Zuführungselemente und Trennelemente eine grosse operationelle Flexibilität resultiert.

Eine solche auf Segmentierung ausgelegte Transporteinrichtung hat auch den Vorteil, dass vorweg kundenspezifische Anlagen angeboten werden können, welche für den Kunden den Vorteil haben, dass solche Transporteinrichtungen jederzeit mindestens mit den beschriebenen Elementen und Aggregaten leicht ergänzt und erweitert werden können.

Eine solche so aufgebaute Transporteinrichtung hat auch den Vorteil, dass einzelne zusätzliche buchblockmässige Zuführungen nicht zwingend aus der Vertikale stattfinden müssen, sondern ebenso gut seitlich zur Produktionsrichtung vorgenommen werden können, vorausgesetzt, es werden spezielle Vorkehrungen getroffen, welche ebenfalls eine Bereicherung des Standes der Technik bilden.

Sind demnach solche seitliche Zuführungen vorgesehen, so muss lediglich sichergestellt werden, dass die Übergabeebene der verschiedenen Teilbuchblocks gegenüber der Transportebene (Buchkanal) der Transporteinrichtung durch entsprechende teilbuchblockführende Bogenstapelzuführungstische höhenverstellbar sind und maximiert in Übereinstimmung mit den im Buchkanal anstehenden Teilbuchblocks gebracht werden können. Also müssen zum einen Vorkehrungen getroffen werden, welche eine Höhenverstellung nach oben und unten vorsehen, und zum anderen muss auch noch operationell abgestimmt werden, dass die Übergabe taktkonform oder in Wirkverbindung mit dem im Buchkanal anstehenden Teilbuchblock erfolgt.

Was die Stapelung der flachaufliegenden Teilbuchblocks betrifft, so lässt es sich vorsehen, dass die Stapelung bei der Übergabe von einem Teilbuchblock fliegend stattfinden kann, also nicht zwingend bei ruhendem Betrieb stattfinden muss.

Dabei weist die höhenverstellbare Bogenstapelzuführungseinheit in der Regel drei verschiedene Betriebsarten auf, nämlich: i) Bei einem Durchlassbetrieb befindet sich die Bogenstapelzuführungseinheit resp. deren Bogenstapelzuführungstisch in der obersten Position; ii) Bei einem Einlege-Betrieb befindet sich die Bogenstapelzuführungseinheit in der untersten Position; iii) Bei einem Zulege-Betrieb erfährt die Höhe der Bogenstapelzuführungseinheit eine Anpassung an die Höhe des Teilbuchblocks. Dabei wird disponiert, dass die Zuführung des jeweils zu stapelnden Teilbuchblocks von der Bogenstapelzuführungseinheit und/oder von dem ZTM-Anleger beigestellt und gegenüber der Überführungsstrecke unter einer Neigungsinterdependenz zwischen den beteiligten Aggregaten durchgeführt wird.

Was den Buchkanal der Transporteinrichtung betrifft, so ist dessen Neigung verstellbar. Normal ist die Neigung bis zu 30°, damit das Buchblockprodukt optimal im Kanal transportiert werden kann. In diesem Zusammenhang muss aber berücksichtigt werden, dass die losen Teilbuchblocks, seien sie über den Buchkanal oder die Bogenstapelzuführungstische herangeführt worden, geringe Haftungskoeffizienten aufweisen, und leicht instabil werden und auseinander rutschen können. Aus diesem Grund soll der Bogenstapelzuführungstisch eine Neigung nicht grösser als 10° aufweisen. Dies setzt dann voraus, dass beim Einlege-Betrieb (siehe oben unter iii), mit dem Bogenstapelzuführungstisch möglichst nahe an den Buchkanal gefahren werden soll, weshalb auch mindestens für den letztgenannten vorzugsweise eine Neigung von 10° vorzusehen ist.

Damit herrscht bei der Dynamik der Stapelung, also des sogenannten Eintaktens, eine Neigungsinterdependenz zwischen den beiden Aggregaten, Buchkanal/Bogenstapelzuführungstisch, dergestalt, dass der Bogenstapelzuführungstisch über eine Serie von Transportbändern verfügt, welche das Eintakten der Bogenstapel gewährleisten, und dass der Transport des Teilbuchblocks im Buchkanal so durchgeführt wird, dass die Stapelung durch eine Fingerkette erfolgt, welche interdependent zwischen Bogenstapelzuführungstisch und Buchkanal agiert, und so die Förderung des jeweiligen Produkts aufrecht erhält.

Es liegt auf der Hand, dass bei einem solchen umfassenden Betrieb mindestens zwei Trennelemente vorgesehen sind, welche mit den Überführungsstrecken dynamisch in Wirkverbindung stehen, d.h., es soll die Übergabe des jeweiligen Teilbuchblocks von einer Überführungsstrecke zur anderen sichergestellt werden, nicht ausgeschlossen kontinuierlich, aber in den meisten Fällen wohl diskontinuierlich.

Demnach lässt sich die Erfindung nicht losgelöst von den Trennelementen betrachten, welche in einem für den flach liegenden Transport der Produkte ausgebildeten Kanal eine wesentliche Komponente für die Überführung der Buchblockprodukte bilden, dies in dem Sinne, dass das Trennelement allgemein in Produktionsrichtung sozusagen als Brücke, als Bindeglied, zwischen einer vorangehenden Überführungsstrecke und einer nachfolgenden Überführungsstrecke fungiert, wobei die fokussierte Transporteinrichtung, wie erwähnt, auch mehrere Trennelemente aufweisen kann.

Das durch einen Servomotor angetriebene Trennelement bewerkstelligt, dass die Buchblockprodukte von einer in der ersten Überführungsstrecke operierenden Fingerkette in die Fingerkette der zweiten nachgeschalteten Überführungsstrecke übergeben werden können.

Die Fingerkette des Trennelements greift grundsätzlich die Buchblockprodukte aus dem Transport entlang einer vorangehenden Überführungsstrecke auf, diese Buchblockprodukte werden dann von der Fingerkette über die durch das Trennelement definierte Transportstrecke weiter befördert, und anschliessend werden diese Buchblockprodukte dann taktgenau an eine nachgeschaltete Überführungsstrecke übergeben.

Durch die verschiedenen Kettenteilungsmöglichkeiten ist der Servomotor in der Lage, mehrfach verschiedene Geschwindigkeitsprofile fahren zu können, wobei der Servomotor vorzugsweise nach abgelegten Steuerungsprofilen gesteuert wird. Dessen ungeachtet, es stehen auch Steuerungsprofile zur Verfügung, welche adaptiv oder prädiktiv die Steuerung des Systems innerhalb der Trennelemente betreiben können.

Einerseits werden die Teilbuchblocks formschlüssig aufeinander gestapelt, andererseits erfolgt deren Transport entlang des Buchkanals vollkommen subsequent zueinander, also strebt der Abstand zwischen den einzelnen Teilbuchblocks und später bei fertig konfektionierten Buchblockprodukte in Produktionsrichtung gegen Null, d.h. die Buchblockprodukte allgemein stossen quasi aufeinander, d.h. eine Format- und Dickenabhängigkeit hat in Produktionsrichtung keinen Einfluss auf die Beabstandung der Buchblockprodukte zueinander. Dies hat den wesentlichen Vorteil, dass eine Umrüstung bei der Produktion unterschiedlicher Buchblockprodukte nicht vorgenommen werden muss.

Allenfalls sind die Steuerungsprofile in der Lage, das Bewegungsprofil innerhalb der ganzen Transporteinheit nach dem Produktformat auszurichten, d.h. beispielsweise bei kürzeren Produktlängen können die intermediären Beschleunigungen in Produktionsrichtung reduziert werden.

Vorteilhaft sollen die im Trennelement operierenden Mitnehmerfinger eine ihr zugeordnete in engen Grenzen gehaltene Lage einnehmen, damit während ihres Einsatzes im Umfeld der Buchblockprodukte eine dynamisierte Schwenkbewegung ausgeschlossen bleibt.

Ein weiterer wesentlicher Vorteil der Erfindung ist darin zu sehen, dass auch durch die liegend geführten Buchblockprodukte innerhalb des Trennelements sowie vor und nach demselben eine echte technologische Bereicherung gegenüber den bekanntgewordenen Transporteinrichtungen stattfindet.

Darüber hinaus müssen auch nicht innerhalb solcher Trennelemente Einstellungen auf Grund der unterschiedlichen Formate dieser Buchblockprodukte vorgenommen werden. Demgemäss kann auch durch den eingesetzten Servomotor im Trennelement erreicht werden, dass auf einen Austausch mechanischer Übersetzungen bei verschiedenen Teilungen der Fingerketten verzichtet werden kann.

Die Erfindung hat deshalb zum Ziel, auf mehrere individuell gestaltete Trennelemente zu setzen, welche für den Betrieb einer Transporteinrichtung zur Verfügung stehen, und welche für die Stapelung mehrerer Teilbuchblocks zur Bildung eines Buchblocks oder allgemein eines Buchblockproduktes entlang eines zur Transporteinrichtung gehörenden Buchkanals so ausgebildet ist, dass der fertig gestapelte Buchblock anschliessend nach vorbestimmten Kriterien einer Bearbeitungsmaschine zugeführt werden kann.

Wie bereits summarisch dargelegt, übernimmt das mit mindestens einem Antrieb betreibbare erste Trennelement einen von der vorangehenden Überführungsstrecke flach zugeführten Teilbuchblock, dieser wird dann flach über die durch das erste Trennelement gebildete Förderungsstrecke weitertransportiert, und anschliessend flach und taktkonform an die nachgeschaltete Überführungsstrecke übergeben.

Dabei wird vorgesehen, dass ein mit mindestens einem eigenständigen Antrieb nachgeschaltetes zweites Trennelement einen von der vorangehenden Überführungsstrecke bereits stehend ausgerichteten Teilbuchblock ebenfalls übernimmt, diesen über die von dem zweiten Trennelement gebildete Förderungsstrecke stehend weitertransportiert, und anschliessend stehend und taktkonform an die nachgeschaltete Überführungsstrecke übergibt, wobei diese letztgenannte Überführungsstrecke, welche sodann sehr kurz gehalten werden kann, der Bearbeitungsmaschine vorgeschaltet ist. Damit wird durch diese Ausführungen hervorgehoben, dass die Transporteinrichtung verschiedene Trennelemente beinhaltet, welche zwar grundsätzlich die gleiche Überführungsstrategie verfolgen und das gleiche Ziel erfüllen, aber in sich, was die Art des Weitertransports der einzelnen Teilbuchblocks betrifft, verschiedene Ausführungen aufweisen.

Insbesondere die zum Einsatz vorgesehenen Trennelemente als Bindeglied zweier Überführungsstrecken weisen entlang ihrer Förderungsstrecken für den Transport der Teilbuchblocks eine integral durchgehende oder segmentierte Fingerkette auf, welche ihrerseits Mitnehmerfinger aufweist, die zunächst für den flach geführten Teilbuchblock eine vertikale oder quasi-vertikale Ausrichtung einnehmen. Sobald diese flach geführten Buchblockprodukte allgemein in eine stehend geführte Lage überführt werden, so gilt ab Beginn dieser neuen Lage die Maxime, dass die Mitnehmerfinger eine horizontale oder quasi-horizontale Ausrichtung aufweisen müssen, und das gilt insbesondere für das zweite oder letzte Trennelement vor der Bearbeitungsmaschine.

Diese Mitnehmerfinger sind drehbar und in einer Umlaufrichtung bewegbar an der Fingerkette gelagert, und sie verlaufen nahezu parallel zur Laufrichtung. Die Länge des einzelnen Mitnehmerfingers ist ab Kanalboden > 150 mm gehalten, wodurch sich hohe Umfangsgeschwindigkeiten beim Abschwenken ergeben. Es soll des Weiteren vorgesehen werden, dass im Buchkanal möglichst kleine Beabstandungen zwischen den transportierten Buchblocks ergeben, damit diese sich nicht verschieben können.

Zu diesem Zweck wird vorzugsweise nach dem Betrieb einer letzten auf Flachzuführung ausgelegte Bogenstapelzuführungseinheit eine Überleitungsstrecke vorgesehen, innerhalb welcher das dort eingeleitete Buchblockprodukt von einem flach liegenden Transportzustand in einen stehend geführten Transport (auf Buchrücken) überführt wird. Wird also im Nachgang dieser Überleitungsstrecke ein zweites oder weiteres Trennelement angeordnet, das bisweilen innerhalb der dargestellten Transporteinrichtung als letztes Trennelement vor der Bearbeitungsmaschine fungiert, so werden ebendiese Buchblockprodukte allgemein über dessen Förderungsstrecke stehend geführt.

Mit dieser Massnahme lässt sich erreichen, dass die nach dem letzten Trennelement angeordnete Überführungsstrecke, wie bereits erwähnt, äusserst kurz gehalten werden kann, weil die Buchblockprodukte somit bereits jene Lage aufweisen, welche die für die Bearbeitungsmaschine vorbestimmt ist, womit weitere diesbezügliche Dispositionen nicht mehr getroffen werden müssen.

Daraus geht vorrichtungsmässig nun hervor, weshalb das letzte Trennelement durch eine andere Führung der Mitnehmerfinger gegenüber einem vorangehenden Trennelement charakterisiert ist.

Die Förderung der zu stapelnden Teilbuchblocks oder des fertig gestapelten Buchblocks über das erste und/oder zweite Trennelement wird taktmässig monoton, synchron oder diskontinuierlich gegenüber dem Takt der den Trennelementen vorangehenden und nachfolgenden Überführungsstrecken geführt, damit kommt hier klar zum Ausdruck, dass diese Trennelemente in sich eine ordnende Funktion auf einen möglichen diskontinuierlichen Takt beim Transport der Buchblockprodukte entlang der übrigen Überführungsstrecken der Transporteinrichtung ausüben

Die Anordnung der Trennelemente innerhalb der Transporteinrichtung erfüllen sodann weitere ordnende Funktionen, welche mit der Stapelung der Teilbuchblocks im Zusammenhang stehen: Zur Sicherstellung der transportbedingten ordnenden Funktion der Trennelemente sind diese innerhalb der Transporteinrichtung so angeordnet, dass die vor- oder nachgeschaltete Überführungsstrecke mindestens mit einer Bogenstapelzuführungseinheit und/oder mindestens einem ZTM-Anleger bestückt ist, wobei die ordnende Funktion der Trennelemente gewichtig dann in Funktion tritt, wenn die Zuführung der zu stapelnden Teilbuchblocks gegenüber einer vorgegebenen Überführungsstrecke sowohl vertikal als auch seitlich gegenüber der Produktionsrichtung der Transporteinrichtung vorgesehen ist, d.h., in diesen Fällen müssen die Trennelemente für die potentiell auftretenden Imponderabilien bei der Zuführung und Weitertransport der Buchblockprodukte ordnend eingreifen.

Wird die seitliche Zuführung des jeweils zu stapelnden Teilbuchblocks zugrunde gelegt, so greift die Steuereinheit durch gezielte Steuerungsbefehle ein, um eine angepasste Höhenverstellung der Bogenstapelzuführungseinheit gegenüber der festgestellten vorhandenen Höhe des in der Überführungsstrecke flach ankommenden Teilbuchblocks vorzunehmen (siehe oben). Bei dieser Vorgehensweise kann es leicht zu taktmässigen Unregelmässigkeiten kommen, welche dann von den Trennelementen leicht "ausgebügelt" werden können.

Des Weiteren haben die Trennelemente bei Bedarf eine Ausrichtung der transportierten Buchblockprodukte innerhalb der Förderstrecke derselben vorzunehmen. Zwar ist es richtig, dass insbesondere die flachtransportierten Buchblockprodukte eine stabilisierende lageerhaltende Neigung innerhalb der Überführungsstrecken aufweisen, welche bis zu 30°, vorzugsweise 20° ± 5°, vorzugsweise bis 10° definiert ist, aber dessen ungeachtet, es können selbst bei dieser lageerhaltenden Neigung zu Unregelmässigkeiten kommen, welche mit den Beschleunigungen oder Verzögerungen der Buchblockprodukte innerhalb des Transports und der Stapelbildung zu tun haben können, und diesbezüglich wird von den Trennelementen Remedur geschaffen, sodass die Buchblockprodukte mindestens nach dem Durchlauf des entsprechenden Trennelements "beruhigt" sind, auch weil die Geschwindigkeitsprofile innerhalb der Trennelemente stabil sind und losgelöst von den übrigen Geschwindigkeiten der Transportelemente der Transporteinrichtung agieren.

### Kurze Beschreibung der Zeichnung

Nachstehend wird die Erfindung unter Bezugnahme der Zeichnung näher dargestellt. Alle für das unmittelbare Verständnis der Erfindung nicht wesentlichen Elemente sind weggelassen worden. Gleiche Elemente sind in den verschiedenen Figuren mit den gleichen Bezugszeichen versehen.

In der Zeichnung zeigt:
- Figur 1a: eine Transporteinrichtung mit den typischen Elementen;
- Figur 1b: eine weitere Transporteinrichtung mit den typischen Elementen;
- Figur 2: eine Prinzip-Darstellung über den Aufbau eines ersten Trennelements;
- Figur 3-7: eine Darstellung verschiedener möglicher Produktionsvarianten;
- Figur 8-10: Darstellungen, welche die verschiedenen Positionen der Bogenstapelzuführungstische zeigen;
- Figur 11: ein Zuführungsaggregat.

### Ausführungsbeispiele der Erfindung

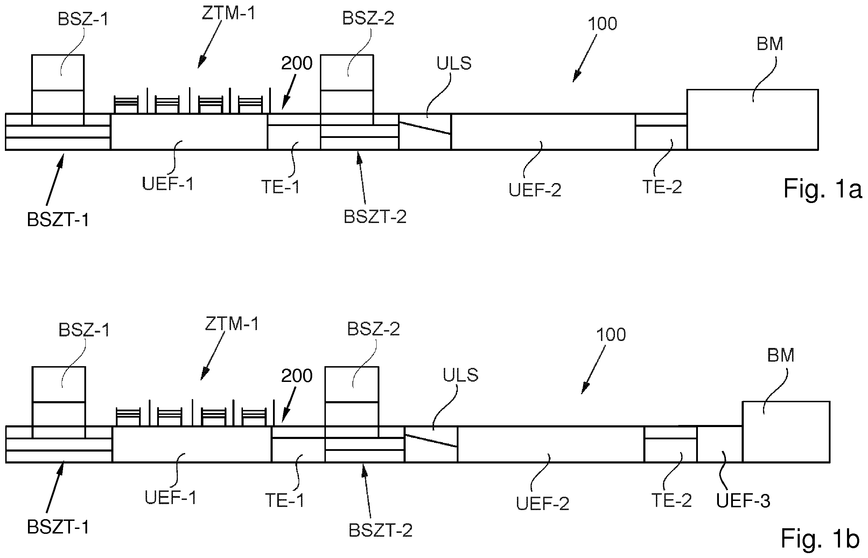

Figur 1a zeigt die Infrastruktur einer Transporteinrichtung 100, welche aus Überführungsstrecken und aus einer Reihe Zuführungselemente gebildeten ist. Zu Beginn der Transporteinrichtung 100 steht eine erste Überführungsstrecke UEF-1, welche mit mindestens einer Bogenstapelzuführungseinheit BSZ-1 und mindestens einem ersten ZTM-Anleger ZTM-1 bestückt ist. In diesem Zusammenhang wird hervorgehoben, dass die Teilbuchblocks zunächst flach aufeinander gestapelt werden, unabhängig davon, aus welcher Ebene diese Zuführung erfolgt. Diese flach gestapelten Teilbuchblocks werden auch in diesem Zustand entlang der Transporteinrichtung 100 in deren Buchkanal 200 befördert, und erst in einer Endphase wird ihre Lage entsprechend den Bedürfnissen einer nachgeschalteten Bearbeitungsmaschine BM angepasst, also werden diese Buchblockprodukte vorzugsweise vor der Bearbeitungsmaschine BM von einem flachliegenden Zustand in eine senkrechte Lage überführt.

Nachgeordnet zu dieser ersten Überführungsstrecke UEF-1 wirkt ein erstes Trennelement TE-1 (auch Übergabeelement genannt), welches einer zweiten Überführungsstrecke UEF-2 vorgeschaltet ist, wobei vorzugsweise zu Beginn dieser zweiten Überführungsstrecke UEF-2 eine zweite Bogenstapelzuführungseinheit BSZ-2 angeordnet ist. Die erwähnte zweite Überführungsstrecke UEF-2 ist mit einer nicht näher dargestellten Überleitungsstrecke ULS erweitert, welche dafür sorgt, wie bereits erwähnt, dass das dort eingeleitete Buchblockprodukt von einem flach liegenden Transportzustand in einen stehend geführten Transport (auf Buchrücken) überführt werden kann.

Demnach ist es so, dass ein im Nachgang dieser Überleitungsstrecke ULS angeordnetes zweites Trennelement TE-2 bereits mit Buchblockprodukten beliefert wird, welche schon die vorgegebene Buchblocklage für die Verarbeitungsschritte in der Bearbeitungsmaschine BM aufweisen, womit dieses letztangeordnete Trennelement TE-2 seine ursächliche Aufgabe erfüllen kann, nämlich gegenüber Imponderabilien und Störungen bei den angelieferten Buchblockprodukten ordnend einzugreifen, damit die nachgeschaltete Bearbeitungsmaschine BM taktkonform mit Buchblocks in der richtigen Lage angeliefert werden kann. Diese Überleitungsstrecke ULS für die lagemässige Veränderung der Buchblockprodukte soll sonach unbedingt vor dem letzten Trennelement in der Transporteinrichtung angeordnet werden.

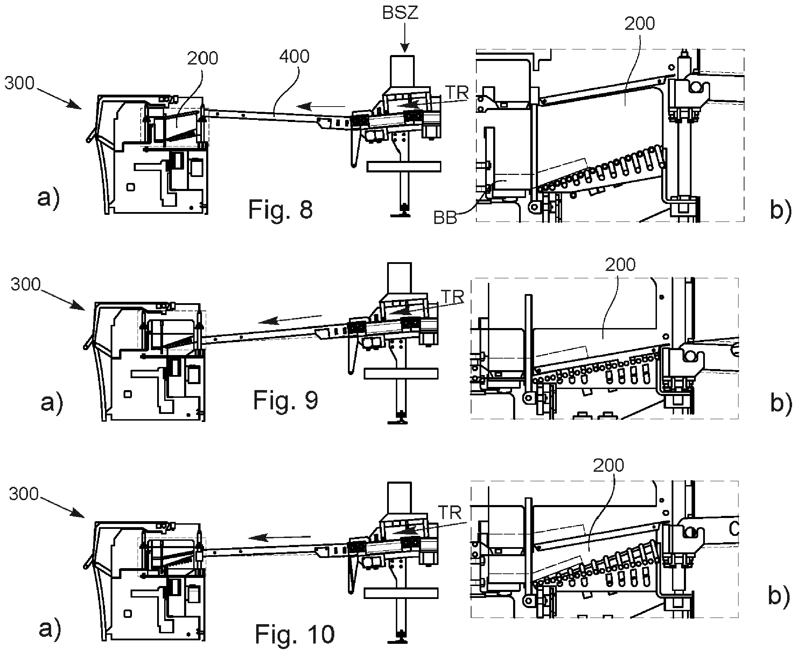

Figur 1b zeigt eine weitere Transporteinrichtung 100 mit drei Überführungsstrecken UEF-1, UEF-2, UEF-3, zwischen denen jeweils ein Trennelement TE-1, TE-2 als Bindeglied angeordnet ist. Die Figuren 1a und 1b zeigen des Weiteren schematisch auf, dass die Zuführungselemente, insbesondere die Bogenstapelzuführungseinheiten BSZ-1, BSZ-2, in Wirkverbindung mit den schematisch dargestellten Lagen der Bogenstapelzuführungstische BSZT stehen, welche eine Höhenanpassung zwischen den aus den verschiedenen Zuführungselementen zugeführten Teilbuchblocks und der sich bereits im Buchkanal befindlichen Stapelung von Buchblockprodukten vornehmen. Hierzu wird auf Figur 8-11 verwiesen.

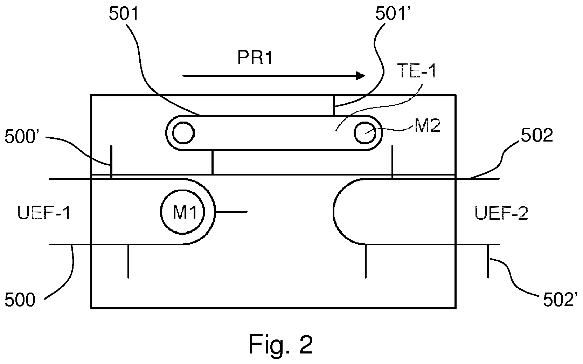

Figur 2 zeigt eine Prinzip-Darstellung über den Aufbau des Trennelements TE-1, welches zwischen der ersten Überführungsstrecke UEF-1 und der zweiten Überführungsstrecke UEF-2 angeordnet ist. Wie dargestellt erfolgt der Antrieb M1, M2 der einzelnen hier ersichtlichen Elemente autonom; eine Abstimmung der Geschwindigkeitsprofile der innerhalb der Transporteinrichtung wirkenden Antriebe lässt sich allenfalls über die Anlagesteuerung erstellen.

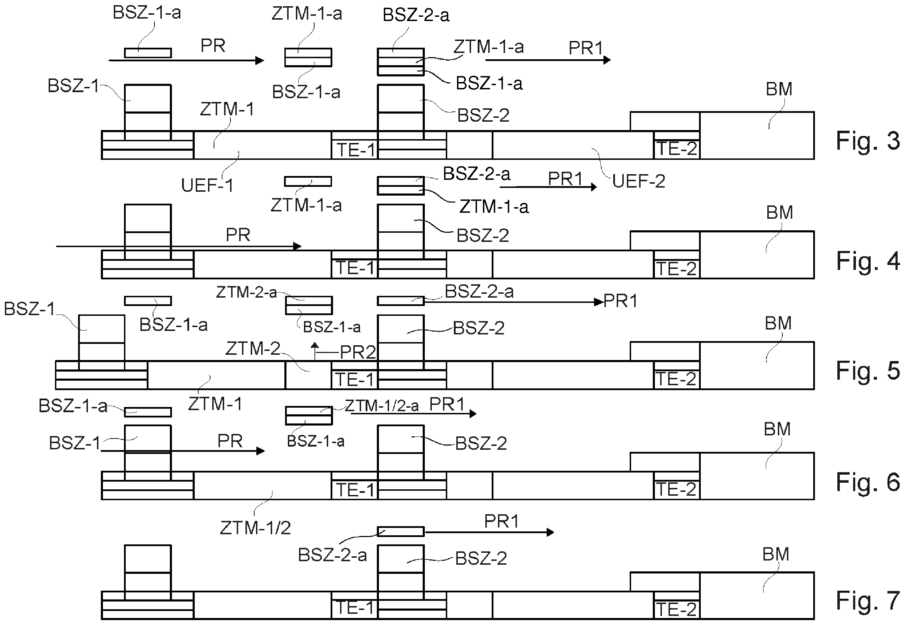

Indessen durch diese Abkoppelung ist das Trennelement TE-1 in der Lage, jederzeit die ihm zugewiesene Aufgabe, nämlich ordnend auf den Fluss der Buchblockprodukte einzuwirken, eigenständig zu erfüllen, um einen von der vorangehenden Überführungsstrecke UEF-1 flach zugeführten Teilbuchblock zu übernehmen, diesen dann flach über die durch das erste Trennelement TE-1 gebildete Förderungsstrecke zu führen, und diesen anschliessend flach und taktkonform an die nachgeschaltete Überführungsstrecke UEF-2 zu übergeben. Ähnliche Überlegungen gelten auch für das weitere Trennelement TE-2. Demnach sind die Trennelemente TE-1, TE-2 mit mindestens einer innerhalb des jeweiligen Trennelements umlaufenden Fingerkette 501 ausgerüstet, welche Mitnehmerfinger 501' aufweist, die entlang der flach geführten Teilbuchblocks eine vertikale oder quasi-vertikale Ausrichtung aufweisen, während sie entlang der stehend geführten Buchblockprodukte eine horizontale oder quasi-horizontale Ausrichtung aufweisen. Die Bedeutung der Produktionsrichtung PR 1/2 wird unter Figuren 3-7 näher erläutert.

Diese Mitnehmerfinger 501' sind drehbar und in einer Umlaufrichtung bewegbar an der Fingerkette 501 gelagert, und sie verlaufen nahezu parallel zur Laufrichtung. Die Länge des einzelnen Mitnehmerfingers 501' ist ab Kanalboden > 150 mm gehalten, wodurch sich hohe Umfangsgeschwindigkeiten beim Abschwenken ergeben. Es soll des Weiteren vorgesehen werden, dass sich im Buchkanal möglichst kleine Beabstandungen zwischen den transportierten Buchblocks ergeben, damit diese sich nicht verschieben können.

Figur 3 zeigt eine erste Produktionsvariante, bei welcher der Endbuchblock aus einem ersten Teilbuchblock BSZ-1-a besteht, welcher von der ersten Bogenstapelzuführungseinheit BSZ-1 beigestellt wird. Gestapelt wird dieser dann subsequent mit einem zweiten Teilbuchblock ZTM-1-a aus dem ZTM-Anleger ZTM-1, und anschliessend kommt noch zur Bildung eines Endbuchblocks eine weitere Zuführung BSZ-2-a aus der zweiten Bogenstapelzuführungseinheit BSZ-2 hinzu, bevor die Weiterleitung dann in Produktionsrichtung PR1 stattfindet. In diesem Fall bleiben die weiteren Elemente im Buchkanal unbenutzt resp. sie sind ausser Betrieb gesetzt.

Figur 4 zeigt eine zweite Produktionsvariante, bei welcher der Endbuchblock aus einem ersten Teilbuchblock ZTM-1-a besteht, welcher von dem ersten ZTM-Anleger ZTM-1 beigestellt wird. Gestapelt wird dieser dann subsequent mit einem zweiten Teilbuchblock BSZ-2-a aus der zweiten Bogenstapelzuführung BSZ-2, bevor die Weiterleitung dann in Produktionsrichtung PR1 stattfindet. In diesem Fall bleiben wiederum die weiteren Elemente im Buchkanal unbenutzt resp. sie sind ausser Betrieb gesetzt.

Figur 5 zeigt eine dritte Produktionsvariante, bei welcher der Endbuchblock aus einem ersten Teilbuchblock BSZ-1-a besteht, welcher von der ersten Bogenstapelzuführungseinheit BSZ-1 beigestellt wird. Gestapelt wird dieser dann subsequent mit einem zweiten Teilbuchblock ZTM-2-a aus einer zweiten Zuführungseinrichtung ZTM-2, welche unmittelbar dem vorangehenden ZTM-Anleger ZTM-1 folgt. Der nun so gebildete Endbuchblock wird dann in Produktionsrichtung PR2 weitergeleitet, wobei diese Weiterleitung ein anderes Ziel haben kann, also nicht zwingend die Bearbeitungsmaschine BM, wie dies normalerweise der Fall ist, wenn die Weiterleitung in Produktionsrichtung mit PR1 gekennzeichnet ist. Bei dieser Produktionsvariante ist dann immer noch möglich, dass ein Teilbuchblock BSZ-2-a aus der zweiten Bogenstapelzuführungseinheit BSZ-2 eigenständig in Produktionsrichtung PR1 weitergeleitet wird. Auch in diesem Fall bleiben die übrigen Elemente im Buchkanal unbenutzt, resp. sie sind ausser Betrieb gesetzt.

Figur 6 zeigt eine vierte Produktionsvariante, bei welcher der Endbuchblock aus einem ersten Teilbuchblock BSZ-1-a besteht, welcher von der ersten Bogenstapelzuführungseinheit BSZ-1 beigestellt wird. Gestapelt wird dieser dann subsequent mit einem zweiten Teilbuchblock ZTM-2-a aus einer zweiten Zuführungseinrichtung ZTM-2, welche unmittelbar dem vorangehenden ZTM-Anleger ZTM-1 folgt. Dieser Endbuchblock wird dann in Produktionsrichtung PR1 weitergeleitet. Auch in diesem Fall bleiben die übrigen Elemente im Buchkanal unbenutzt, resp. sie sind ausser Betrieb gesetzt.

Figur 7 zeigt eine fünfte Produktionsvariante, bei welcher der Endbuchblock lediglich aus einem Teilbuchblock BSZ-2-a besteht, welcher von der zweiten der Bogenstapelzuführungseinheit BSZ-2 beigestellt wird, um dann in Produktionsrichtung PR1 weitergeleitet zu werden. Auch in diesem Fall bleiben die übrigen Elemente im Buchkanal unbenutzt, resp. sie sind ausser Betrieb gesetzt.

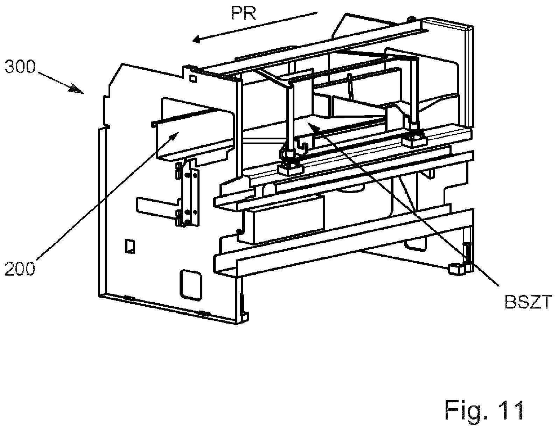

Figuren 8-10 zeigen die Positionen der verschiedenen Bogenstapelzuführungstische bei verschiedenen Betriebsarten, wobei die anschliessende Figur 11 speziell das Zuführungsaggregat 300 zeigt. Dabei weist der höhenverstellbare Bogenstapelzuführungstisch BSZT (siehe Figur 11) der Bogenstapelzuführungseinheit BSZ mit deren Transportrichtung TR in der Regel drei verschiedene Betriebsarten auf: Gemäss Figur 8a-b befindet sich die Bogenstapelzuführungseinheit BSZ resp. deren Bogenstapelzuführungstisch BSZT bei einem Durchlassbetrieb in der obersten Position. Dies geht klar aus Figur 8a hervor, wo das höherverstellbare Überführungselement 400 gegenüber dem Buchkanal 200 die oberste Position einnimmt. Aus Figur 8b ist dann ersichtlich, dass die Förderebene des Buchkanals 200 eine Durchlassposition einnimmt. Dies ist bei einem Einlege-Betrieb (Figur 9) anders, befindet sich die Bogenstapelzuführungseinheit BSZ in diesem Fall, siehe Figur 9a-b, in der untersten Position. Des Weiteren findet eine weitere Höhenverstellung statt, wenn es darum geht, in einen Zulege-Betrieb zu übergehen. In diesem Fall erfährt die Höhe der Bogenstapelzuführungseinheit BSZ, siehe Figur 10a-b, eine Anpassung der Höhe des Bogenstapelzuführungstisches BSZT an die Höhe des Teilbuchblocks. Dabei wird disponiert, dass die Zuführung des jeweils zu stapelnden Teilbuchblocks (Figur 8b, Pos. BB), der von der Bogenstapelzuführungseinheit BSZ und/oder von dem ZTM-Anleger beigestellt wird, eine gegenüber der Überführungsstrecke implementierten Neigungsinterdependenz zwischen den beteiligten Aggregaten ausweist. Die Stellung dieser Teilbuchblocks BB geht aus den übrigen Figuren 9b und 10b hervor.

## Patentansprüche

1. Transporteinrichtung (100) für die Stapelung mehrerer Teilbuchblocks entlang einer aus Überführungsstrecken gebildeten Transportstrecke, wobei das fertig gestapelte Buchblockprodukt anschliessend einer Bearbeitungsmaschine (BM) zuführbar ist, wobei die Transporteinrichtung (100) aus mindestens folgenden Elementen gebildet ist:
a) aus einer ersten Überführungsstrecke (UEF-1), welche zu Beginn der Transporteinrichtung (100) angeordnet ist;
b) aus mindestens einem ersten Trennelement (TE-1), das der ersten Überführungsstrecke (UEF-1) nachgeschaltet und mindestens einer zweiten Überführungsstrecke (UEF-2) vorgeschaltet ist;
c) aus einem der zweiten Überführungsstrecke (UEF-2) nachgeschalteten zweiten oder letzten Trennelement (TE-2), welches einer mit der Transporteinrichtung (100) in Wirkverbindung stehenden Bearbeitungsmaschine (BM) vorgeschaltet ist;
d) aus einer Überleitungsstrecke (ULS), welche vor oder nach dem letzten Trennelement angeordnet ist, innerhalb welcher das dort eingeleitete Buchblockprodukt von einer flach liegenden in eine stehend geführte Transportlage überführbar ist;
e) wobei mindestens eine Überführungsstrecke (UEF-1, UEF-2, UEF-3) mit mindestens einer Bogenstapelzuführungseinheit (BSZ-1, BSZ-2) und/oder mindestens einem ZTM-Anleger (ZTM-1) bestückt ist.

2. Transporteinrichtung (100) für die Stapelung mehrerer Teilbuchblocks entlang einer aus Überführungsstrecken gebildeten Transportstrecke, wobei das fertig gestapelte Buchblockprodukt anschliessend einer Bearbeitungsmaschine (BM) zuführbar ist, wobei die Transporteinrichtung (100) aus folgenden Elementen gebildet ist:
a) aus einer ersten Überführungsstrecke (UEF-1), welche zu Beginn der Transporteinrichtung angeordnet ist;
b) aus mindestens einem ersten Trennelement (TE-1), das der ersten Überführungsstrecke (UEF-1) nachgeschaltet und mindestens einer zweiten Überführungsstrecke (UEF-2) vorgeschaltet ist;
c) aus einem der zweiten Überführungsstrecke (UEF-2) nachgeschalteten zweiten Trennelement, welches einer dritten Überführungsstrecke (UEF-3) vorgeschaltet ist;
d) wobei der dritten Überführungsstrecke (UEF-3) die Bearbeitungsmaschine (BM) nachgeschaltet ist;
e) aus einer Überleitungsstrecke (ULS), welche vor dem zweiten Trennelement angeordnet ist, innerhalb welcher das dort eingeleitete Buchblockprodukt von einer flach liegenden in eine stehend geführte Transportlage überführbar ist;
f) wobei mindestens eine Überführungsstrecke (UEF-1, UEF-2, UEF-3) mit mindestens einer Bogenstapelzuführungseinheit (BSZ-1, BSZ-2) und/oder mindestens einem ZTM-Anleger (ZTM-1) bestückt ist.

3. Transporteinrichtung nach Anspruch 1 oder 2, **dadurch gekennzeichnet, dass** die Trennelemente dependent von anderen Zuführungen oder autonom betreibbar sind.

4. Transporteinrichtung nach Anspruch 1 oder 2, **dadurch gekennzeichnet, dass** mindestens die Überführungsstrecken zueinander segmentiert betreibbar sind.

5. Transporteinrichtung nach Anspruch 1 oder 2, **dadurch gekennzeichnet, dass** die Transportebene des Buchkanals (200) mit einem Neigungswinkel bis 30°, vorzugsweise 20° ± 5°, vorzugsweise bis 10° gebildet ist.

6. Transporteinrichtung nach einem der Ansprüche 1 bis 5, **dadurch gekennzeichnet, dass** die Zuführung des jeweils zu stapelnden Teilbuchblocks von einem Bogenstapelzuführungstisch (BSZT) zu einer entsprechenden Überführungsstrecke unter einer Neigungsinterdependenz zwischen den beiden Aggregaten durchführbar ist.

7. Transporteinrichtung nach den Ansprüchen 1 oder 2, **dadurch gekennzeichnet, dass** die aufeinander stattfindende Stapelung der zugeordneten Teilbuchblocks zur Bildung eines fertigen Buchblockprodukts innerhalb der Transporteinrichtung (100) durch Steuerungsprofile gesteuert ist.

8. Transporteinrichtung nach den Ansprüchen 1 oder 2, **dadurch gekennzeichnet, dass** die Zuführung des jeweiligen zu stapelnden Teilbuchblocks aus mindestens einer Bogenstapelzuführungseinheit (BSZ-1, BSZ-2) und/oder einem ZTM-Anleger (ZTM-1) vertikal und/oder seitlich gegenüber der Produktionsrichtung der von den Überführungsstrecken gebildeten Transporteinrichtung (100) durchführbar ist.

9. Transporteinrichtung nach Anspruch 8, **dadurch gekennzeichnet, dass** die seitliche Zuführung des jeweiligen zu stapelnden Teilbuchblocks durch Steuerungsprofile erfolgt, wobei bei Bedarf fortlaufend eine angepasste Verstellung zwischen der vorgegebenen Höhe des sich in der Überführungsstrecke befindlichen Teilbuchblocks und der Übergabehöhe des über einen höhenverstellbaren Bogenstapelzuführungstisch (BSZT) der Bogenstapelzuführungseinheit (BSZ-1, BSZ-2) jeweils herangeführten weiteren Teilbuchblocks stattfindet.

10. Transporteinrichtung nach Anspruch 9, **dadurch gekennzeichnet, dass** bei dem höhenverstellbaren Bogenstapelzuführungstisch (BSZT) drei verschiedene Betriebsarten zu Grunde gelegt sind, nämlich:
a) Bei einem Durchlassbetrieb: Der Bogenstapelzuführungstisch (BSZT) ist in der oberster Position angeordnet;
b) Bei einem Einlege-Betrieb: Der Bogenstapelzuführungstisch (BSZT) ist in der untersten Position angeordnet;
c) Bei einem Zulege-Betrieb: Die Höhe des Bogenstapelzuführungstisches (BSZT) wird an die Höhe des Teilbuchblocks angepasst.

11. Transporteinrichtung nach einem der Ansprüche 1-10, **dadurch gekennzeichnet, dass** weitere Steuerungsprofile die Transporteinrichtung (100) steuern, durch welche eine intermediäre beliebige Umleitung eines Teilbuchblocks aus dem Buchkanal (200) und/oder Bogenstapelzuführungstisch (BSZT) gesteuert wird.

12. Trennelement für den Betrieb der Transporteinrichtung nach Anspruch 1, **dadurch gekennzeichnet, dass** mindestens ein erstes Trennelement (TE-1) innerhalb der Transporteinrichtung als Bindeglied zwischen einer vorangehend angeordneten Überführungsstrecke (UEF-1) und einer nachgeordneten Überführungsstrecke (UEF-2) angeordnet ist, dass das mit mindestens einem Antrieb betreibbare erste Trennelement (TE-1) einen von der vorangehenden Überführungsstrecke (UEF-1) flach zugeführten Teilbuchblock übernimmt, diesen flach über die von dem ersten Trennelement (TE-1) gebildete Förderungsstrecke weitertransportiert, diesen anschliessend flach und taktkonform an die nachgeschaltete Überführungsstrecke (UEF-2) übergibt.

13. Trennelement für den Betrieb der Transporteinrichtung gemäss Anspruch 2, **dadurch gekennzeichnet, dass** mindestens ein zweites Trennelement (TE-2) innerhalb der Transporteinrichtung als Bindeglied zwischen einer vorangehend angeordneten Überführungsstrecke (UEF-2) und einer nachgeordneten Überführungsstrecke (UEF-3) angeordnet ist, dass das mit mindestens einem Antrieb betreibbare zweite Trennelement (TE-2) ein von der vorangehenden Überführungsstrecke (UEF-2) stehend zugeführte Buchblockprodukt übernimmt, dieses über die von dem zweiten Trennelement (TE-2) gebildete Förderungsstrecke stehend weitertransportiert, dieses anschliessend stehend und taktkonform an die nachgeschaltete Überführungsstrecke (UEF-3) übergibt.

14. Trennelement nach den Ansprüchen 12 oder 13, **dadurch gekennzeichnet, dass** Überführungsstrecken und/oder Trennelemente entlang ihrer Förderungsstrecken für den Transport der Teilbuchblocks eine integral durchgehende oder segmentierte Fingerkette (500, 501, 502) aufweisen.

15. Trennelement nach Anspruch 14, **dadurch gekennzeichnet, dass** die Fingerkette (500, 501, 502) Mitnehmerfinger (500', 501', 502') aufweist, welche entlang der flach geführten Teilbuchblocks eine vertikale oder quasi-vertikale Lage und welche entlang der stehend geführten Buchblockprodukte eine horizontale oder quasi-horizontale Lage einnehmen.
